# EUROPÄISCHE PATENTSCHRIFT

(11) **EP 3 753 095 B1**
(45) Veröffentlichungstag und Bekanntmachung des Hinweises auf die Patenterteilung: **26.06.2024**
(21) Anmeldenummer: 19701552.2
(22) Anmeldetag: 31.01.2019
(51) Int. Cl.: H02M 1/42, H02M 1/14, H02M 1/15

(54) **STROMSCHALTERSTEUERUNG**
CURRENT SWITCH CONTROL MEANS
COMMANDE DE COMMUTATION DE COURANT

(30) Priorität: 14.02.2018 BE 201805091
(43) Veröffentlichungstag der Anmeldung: 23.12.2020
(73) Patentinhaber: PHOENIX CONTACT GmbH & Co. KG, 32825 Blomberg (DE)
(72) Erfinder: SCHULTE, Thorsten, 33154 Salzkotten-Holsen (DE); KNOKE, Raphael, 33184 Altenbeken (DE); MIGULKIN, Sergej, 33104 Paderborn (DE)
(74) Vertreter: Patentship Patentanwaltsgesellschaft mbH
(86) Internationale Anmeldenummer: PCT/EP2019/052395
(87) Internationale Veröffentlichungsnummer: WO 2019/158367

(56) Entgegenhaltungen:
- US-A1- 2013 285 627
- US-A1- 2014 169 049

## Beschreibung

Die vorliegende Offenbarung betrifft eine Stromschaltersteuerung zur Schaltzeitregelung von steuerbaren Stromschaltern.

Stromschaltersteuerungen werden insbesondere zur Steuerung von Stromsignalen mehrerer verschachtelter Konverter eingesetzt, um mittels abwechselnder Schaltung der verschachtelten Konverter aus einzelnen Stromsignalen ein Summensignal, insbesondere ein Gleichspannungssignal zu generieren. Um insbesondere hochfrequente Wechselspannungsanteile in dem Summensignal zu unterbinden, kann es notwendig sein einen Stromfluss von dem jeweiligen verschachtelten Konverter zu einem elektrischen Verbraucher in Abhängigkeit von einer Ausgangsstromstärke des jeweiligen verschachtelten Konverters zu schalten. Üblicherweise werden mindestens zwei verschachtelte Konverter um eine halbe Schaltperiode phasenversetzt geschaltet um ein Summensignal aus zwei gleichpoligen Halbwellen zu erzeugen.

Da der jeweilige Schaltzeitpunkt in Abhängigkeit der jeweiligen Ausgangsstromstärke bestimmt sein kann, kann eine präzise Strommessung notwendig sein, siehe "Digital current balancing for an interleaved boost PFC"; Texas Instruments. Eine präzise Strommessung kann jedoch in nachteiliger Weise mit erhöhten Herstellungskosten der Stromschaltersteuerung verbunden sein. Ein aus einer fehlerbehafteten Strommessung ermittelter Schaltzeitpunkt kann von dem idealen Schaltzeitpunkt abweichen, sodass das Summensignal in nachteiliger Weise Wechselspannungsanteile aufweisen kann. Insbesondere kann eine Wechselspannungsleistung übertragen werden, welche einen vorbestimmten frequenzabhängigen Leistungsgrenzwert übersteigt.

Die Druckschrift US 2013/0285627 A1 offenbart ein Leistungsumwandlungssystem, bei dem auftretende Leistungsmengenunterschiede in den jeweiligen Leistungsmodulen analysiert und dann die identifizierten Leistungsungleichgewichte in den diesen Leistungsmodulen entsprechend kompensiert werden.

Die Druckschrift US 2014/0169049 A1 offenbart ein eine Steuerung für einen Leistungswandler zur Erzeugung eines Strommesssignals.

Es ist die Aufgabe der vorliegenden Offenbarung, eine Stromschaltersteuerungen bereitzustellen, welche mit einem kosten- und/oder bauteilreduzierten Strommessgerät eine präzise Schaltung von Stromsignalen zu einem Summensignal mit reduzierten Wechselspannungsanteilen realisiert.

Diese Aufgabe wird durch die Merkmale des unabhängigen Anspruchs gelöst. Vorteilhafte Ausführungsformen sind Gegenstand der abhängigen Ansprüche, der Beschreibung sowie der beiliegenden Figuren.

Die vorliegende Offenbarung basiert auf der Erkenntnis, dass die obige Aufgabe durch eine Stromschaltersteuerung gelöst werden kann, welche zusätzlich zu einem Stromschaltregler für jeden steuerbaren Stromschalter, einen Referenzwertregler aufweist. Der Referenzwertregler ist ausgebildet, fehlerbehaftete Strommessung von Strommessgeräten, welche den Stromfluss durch den jeweiligen steuerbaren Schalter erfassen, durch Ändern eines Stromreferenzwerts auszugleichen. Dem jeweiligen Stromschaltregler sind der angepasste Stromreferenzwert und der jeweils gemessene Strommesswert als Eingangsparameter bereitgestellt, wobei der jeweilige Stromschaltregler ein Schaltsignal für den jeweiligen steuerbaren Schalter erzeugt. Der Referenzwertregler nutzt eine Differenz der Schaltsignale der jeweiligen Stromschaltregler, um den Stromreferenzwert zu regeln.

Gemäß einem ersten Aspekt betrifft die Offenbarung eine Stromschaltersteuerung zur Schaltzeitregelung von steuerbaren Schaltern. Die Stromschaltersteuerung umfasst einen ersten steuerbaren Schalter, welcher einen ersten Schaltzustand und einen zweiten Schaltzustand aufweist, und einem ersten Stromschaltregler zur Schaltsteuerung des ersten steuerbaren Schalters. Der erste Stromschaltregler ist ausgebildet, auf Grundlage eines Stromreferenzwerts und eines von einem weiteren Strommessgerät erfassten ersten Strommesswerts eines Stromflusses durch den ersten steuerbaren Schalter ein erstes Schaltzeitregelsignal und ein dem ersten Schaltzeitregelsignal entsprechendes erstes pulsweitenmoduliertes Schaltsignal zur Steuerung des ersten steuerbaren Schalters zu erzeugen. Ferner ist der erste steuerbare Schalter ausgebildet, entsprechend dem zweiten pulsweitenmodulierten Schaltsignal von dem ersten Schaltzustand in den zweiten Schaltzustand überzugehen.

Die Stromschaltersteuerung umfasst ferner einen zweiten steuerbaren Schalter, welcher einen dritten Schaltzustand und einen vierten Schaltzustand aufweist, und einen zweiten Stromschaltregler zur Schaltsteuerung des zweiten steuerbaren Schalters. Der zweite Stromschaltregler ist ausgebildet, auf Grundlage eines Stromreferenzwerts und eines von einem Strommessgerät erfassten zweiten Strommesswerts eines Stromflusses durch den zweiten steuerbaren Schalter ein zweites Schaltzeitregelsignal und ein dem zweiten Schaltzeitregelsignal entsprechendes zweites pulsweitenmoduliertes Schaltsignal zur Steuerung des zweiten steuerbaren Schalters zu erzeugen. Der zweite steuerbare Schalter ist ferner ausgebildet, entsprechend dem zweiten pulsweitenmodulierten Schaltsignal von dem dritten Schaltzustand in den vierten Schaltzustand überzugehen. Weiterhin umfasst die Stromschaltersteuerung einen Referenzwertregler, welcher ausgebildet ist, auf Grundlage des ersten Schaltzeitregelsignals und des zweiten Schaltzeitregelsignals den Stromreferenzwert jeweils separat für den ersten Stromschaltregler und den zweiten Stromschaltregler zu ändern.

Die Stromschaltersteuerung kann insbesondere für verschachtelte Leistungsfaktorkorrektur Schaltungen (PFC) zur Steuerung eines Ausgangssignals genutzt werden. Für diese Schaltungen kann es notwendig sein Grenzwerte bezüglich der Wechselstromanteile des Ausgangssignals nicht zu überschreiten. Die Grenzwerte können beispielsweise in einer Gerätespezifikation definiert sein, wobei ein Betrieb der Schaltung an die Einhaltung der Gerätespezifikation gebunden sein kann. Insbesondere kann es notwendig sein die Grenzwertkurve EMC dass A nach DNV-GL Class Guideline durch Signalpegel des Ausgangssignals nicht zu überschreiten.

Ein anzunehmender Wechselstromanteil des Ausgangssignals kann reduziert sein, falls die steuerbaren Schalter eine gleiche Schaltzeit erfahren. Eine Genauigkeit der Schaltzeit kann proportional zu einem Messfehler der Strommessgeräte sein, sodass mit einer zunehmenden Abweichung des jeweiligen Strommesswerts von der tatsächlichen Stromstärke des durch den jeweiligen Schalter fließenden Stroms eine Abweichung von einem idealen Schaltzeitpunkt zunehmen kann. Demnach können die Schaltzeitpunkte der steuerbaren Schalter von einem ideal phasenversetzten Anschalten abweichen, sodass sich der Strom, der durch den ersten steuerbaren Schalter fließt, mit dem weiteren Strom, der durch den zweiten steuerbaren Schalter fließt überlagert. Dadurch können Signalanteile generiert werden, welche gegenüber dem Ausgangssignal eine erhöhte Frequenz aufweisen.

Eine Messungenauigkeit des Strommessgeräts, welches durch einen Strommesswiderstand gebildet ist, kann gegenüber anderen Strommessgeräten größer sein, wobei eine Abweichung des von dem Strommessgerät bereitgestellten Strommesswerts mittels dem Referenzwertregler kompensiert werden, sodass die Schaltzeiten der steuerbaren Schalter synchron sein können. Der Referenzwertregler kann insbesondere eine zusätzliche Regelstufe sein, welche die Eingangssignale der Stromschaltregler regelt und mit dem jeweiligen Stromschaltregler eine zweistufige Regeleinheit bildet.

Mit dem den Stromschaltreglern vorgeschalteten Referenzwertregler kann vorteilhafterweise auf eine präzise Strommessung verzichtet werden und ein fehlerbehafteter Strommesswert durch eine Regelung des Stromreferenzwerts ausgeglichen werden. Dadurch können insbesondere systematische Fehler und/oder konstante Betragsfehler des Strommesswerts kompensiert werden.

Vorteilhafterweise ist eine Kombination aus Referenzwertregler und Strommessgeräten mit höheren Toleranzbereichen günstiger herstellbar als ein Strommessgerät mit vergleichsweise geringeren Toleranzbereichen, sodass die Stromschaltersteuerung günstiger herstellbar ist. Insbesondere können Bauteilkosten für die Stromschaltersteuerung reduziert sein, falls der Referenzwertregler als Teil eines Softwareprogramms auf einem digitalen Signalprozessor ausführbar ist, wobei das Softwareprogramm auch den ersten Stromschaltregler und den zweiten Stromschaltregler umfasst.

Die steuerbaren Schalter können ausgebildet sein, zwischen den jeweiligen Schaltzuständen entsprechend dem pulsweitenmodulierten Schaltsignal zu wechseln. In dem ersten Schaltzustand kann der erste steuerbare Schalter ausgebildet sein, einen elektrischen Strom durch den ersten steuerbaren Schalter zu leiten und in dem zweiten Schaltzustand kann der erste steuerbare Schalter ausgebildet sein, eine Stromleitung durch den ersten steuerbaren Schalter zu unterbinden. Entsprechend kann der zweite steuerbare Schalter ausgebildet sein, in dem dritten Schaltzustand einen elektrischen Strom durch den zweiten steuerbaren Schalter zu leiten und in dem vierten Schaltzustand, eine Stromleitung durch den zweiten steuerbaren Schalter zu unterbinden.

In einer Ausführungsform weist der erste Stromschaltregler einen ersten proportionalen-integrierenden-derivativen (PID) Regler auf und ist ausgebildet, den ersten Strommesswert auf Grundlage des Stromreferenzwerts zu verarbeiten, insbesondere den ersten Strommesswert von dem Stromreferenzwert zu subtrahieren und diesen Differenzwert als ein erstes Eingangssignal dem ersten PID-Regler bereitzustellen. Dadurch wird der Vorteil erreicht, dass der erste Stromschaltregler mit dem ersten PID-Regler einer Differenz zwischen dem Strommesswert und dem Referenzwert entgegen regeln kann, um den Differenzbetrag zu verringern. Je kleiner der Differenzbetrag desto kleiner ist die Abweichung der Schaltzeit des ersten steuerbaren Schalters von einer Sollschaltzeit, welche an den Referenzwert gekoppelt sein kann.

In einer Ausführungsform ist der erste PID-Regler ausgebildet, auf Grundlage des ersten Eingangssignals ein erstes Schaltzeitregelsignal bereitzustellen. Der PID-Regler kann insbesondere eine kontinuierlich modulierte Regelschleife bilden, welcher eine Abweichung des jeweiligen Strommesswerts gegenüber dem Referenzwert erfasst und einen Korrekturwert in Form eines Schaltzeitregelsignals zu erzeugen. Der Regler kann dabei die Abweichung über einen Zeitraum akkumulieren, eine Steigung im zeitlichen Verlauf der Abweichung erfassen und/oder einen proportionalen Regelsignalanteil aufweisen. Insbesondere kann der PID-Regler für die proportionale, integrative und/oder derivative Regelkomponente einen Einstellparameter aufweisen, mit welchem der jeweilige Anteil der Regelkomponente an dem Schaltzeitregelsignal eingestellt werden kann.

In einer Ausführungsform weist der erste Stromschaltregler einen ersten Signalgenerator auf, welcher ausgebildet ist, das erste Schaltzeitregelsignal in das erste pulsweitenmodulierte Schaltsignal zur Ansteuerung des ersten steuerbaren Stromschalters, zu wandeln. Der Signalgenerator kann insbesondere ausgebildet sein, das Schaltzeitregelsignal, welches ein diskretes digitales Signal sein kann, in ein binäres pulsweitenmoduliertes Signal zu wandeln, mit welchem eine Länge von Einschaltphasen des ersten steuerbaren Stromschalters im Verhältnis zu Ausschaltphasen des ersten steuerbaren Stromschalters verändert werden kann. Ferner kann der Signalgenerator ausgebildet sein eine Schaltfrequenz des ersten Stromschalters zu ändern.

In einer Ausführungsform weist der zweite Stromschaltregler einen zweiten proportional-integral-derivativen (PID) Regler auf und ist ausgebildet, den zweiten Strommesswert auf Grundlage des Stromreferenzwerts zu verarbeiten, insbesondere den zweiten Strommesswert von dem Stromreferenzwert zu subtrahieren und als ein zweites Eingangssignal dem zweiten PID-Regler bereitzustellen.

In einer Ausführungsform ist der zweite PID-Regler ausgebildet, auf Grundlage des zweiten Eingangssignals ein zweites Schaltzeitregelsignal bereitzustellen.

In einer Ausführungsform weist der zweite Stromschaltregler einen zweiten Signalgenerator auf, welcher ausgebildet ist, das zweite Schaltzeitregelsignal in das erste pulsweitenmodulierte Schaltsignal zur Ansteuerung des zweiten steuerbaren Stromschalters, zu wandeln.

Der Referenzwertregler ist ausgebildet, ein Referenzwertregelsignal zu erzeugen und dieses mit dem Stromreferenzwert zu verarbeiten, und ferner das Referenzwertregelsignal zum ersten Stromreferenzwert zu addieren und vom zweiten Stromreferenzwert zu subtrahieren.

Erfindungsgemäß wird dem ersten Stromschaltregler ein Summensignal bestehend aus dem Referenzwertregelsignal und dem Stromreferenzwert als Eingangssignal bereitgestellt, und wird dem zweiten Stromschaltregler ein Differenzsignal bestehend aus dem Stromreferenzwert abzüglich des Referenzwertregelsignals bereitgestellt. Dadurch kann das Referenzwertregelsignal genutzt werden, um eine zeitliche Überschneidung der Anschaltzeit des ersten steuerbaren Schalters mit der Anschaltzeit des zweiten steuerbaren Schalters zu verringern. Den Stromschaltreglern kann mittels dem Referenzwertregler ein jeweils angepasster Stromreferenzwert als Eingangssignal bereitgestellt sein, wobei der jeweilige angepasste Stromreferenzwert um den doppelten Betrag des Referenzwertregelsignals von dem jeweils anderen angepassten Stromreferenzwert abweichen kann. Demnach können die Schaltzeiten der steuerbaren Schalter gleichzeitig in entgegengesetzte Richtung angepasst werden. Beispielsweise, kann eine Schaltzeit des ersten steuerbaren Schalters verzögert werden und eine Schaltzeit des zweiten steuerbaren Schalters vorgezogen werden.

In einer Ausführungsform ist der Referenzwertregler ausgebildet, einen Differenzwert zwischen dem ersten Schaltzeitregelsignal und dem zweiten Schaltzeitregelsignal zu erzeugen.

In einer Ausführungsform weist der Referenzwertregler einen weiteren proportionalen-integrierenden-derivativen (PID) Regler auf und ist ausgebildet, dem weiteren PID-Regler den Differenzwert als ein Eingangssignal bereitzustellen, und wobei der PID-Regler ausgebildet ist, das Referenzwertregelsignal zu erzeugen.

Der Referenzwertregler kann ausgebildet sein, die Stromschaltregler derart zu steuern, dass eine Differenz zwischen dem ersten Schaltzeitregelsignal und dem zweiten Schaltzeitregelsignal reduziert, insbesondere minimiert wird.

In einer Ausführungsform umfasst die Stromschaltersteuerung ein erstes Strommessgerät, welches ausgebildet ist, den ersten Strommesswert eines durch den ersten steuerbaren Schalter fließenden Stroms zu erfassen, und ein zweites Strommessgerät, welches ausgebildet ist, den zweiten Strommesswert eines durch den zweiten steuerbaren Schalter fließenden Stroms zu erfassen, wobei das erste Strommessgerät und/oder das zweite Strommessgerät jeweils einen Strommesswiderstand umfassen.

Die Strommessgeräte können jeweils einer Induktivität eines verschachtelten Konverters nachgeschaltet sein, um eine Stromstärke eines Stromflusses durch die jeweilige Induktivität zu erfassen. Die Strommessgeräte können beispielsweise Stromwandler sein, welche in einem Schaltpfad des jeweiligen steuerbaren Stromschalters angeordnet sind. Die Stromregler können unabhängig voneinander einen Stromfluss von dem jeweiligen vorgeschalteten verschachtelten Konverter zu einem elektrischen Verbraucher zeitlich regeln.

In einer Ausführungsform sind der erste Stromschaltregler, der zweite Stromschaltregler und/oder der Referenzwertregler Teil eines digitalen Signalprozessors (DSP) und/oder wobei der erste Stromschaltregler, der zweite Stromschaltregler und/oder der Referenzwertregler sind zumindest teilweise als ein Softwareprogramm realisiert, welches von dem digitalen Signalprozessor ausführbar ist.

Dadurch kann der Vorteil realisiert sein, dass die Herstellungskosten der Stromschaltersteuerung mit dem Referenzwertregler die Herstellungskosten einer Stromschaltersteuerung ohne Referenzwertregler nicht übersteigen oder der Mehrbetrag kleiner ist, als eine Herstellungskostendifferenz bei Verwendung von präzisen Strommessgerät gegenüber weniger präzisen Strommessgeräten. Die Herstellungskosten für eine Stromschaltersteuerung können umso geringer sein, je mehr Strommessungen mittels eines weniger präzisen Strommessgeräts, insbesondere mit einem Strommesswiderstand durchgeführt und mittels des Referenzwertreglers kompensiert werden können. Der digitale Signalprozessor kann ferner eine interne Peripherie aufweisen, welche ausgebildet ist, ein Strommesssignal, insbesondere die Strommesswerte zu verstärken.

In einer Ausführungsform sind der erste steuerbare Schalter und der zweite steuerbare Schalter elektrisch parallel zueinander angeordnet, wobei ein Regelverbund, umfassend den ersten Stromschaltregler, den zweiten Stromschaltregler und den Referenzwertregler, ausgebildet ist, den ersten steuerbaren Schalter mit dem ersten pulsweitenmodulierten Schaltsignal zu beaufschlagen und den zweiten steuerbaren Schalter mit dem zweiten pulsweitenmodulierten Schaltsignal zu beaufschlagen.

In einer Ausführungsform ist der Regelverbund ausgebildet, mittels einer Steuerung der jeweiligen Schaltzeit der steuerbaren Schalter eine Stromstärke und/oder eine Stromfrequenz eines Summenstromes, welcher als Summensignal des durch den ersten steuerbaren Schalter fließenden Stroms und des durch den zweiten steuerbaren Schalter fließenden Stroms gebildet ist, zu regeln.

In einer Ausführungsform ist der Referenzwertregler ausgebildet, eine Abweichung des ersten Strommesswerts von dem tatsächlich durch den ersten steuerbaren Schalter fließenden Stroms und/oder eine Abweichung des zweiten Strommesswerts von dem tatsächlich durch den zweiten steuerbaren Schalter fließenden Stroms mittels einer Regelung des Stromreferenzwertes zu kompensieren, um hochfrequente Stromschwingungen mit einer Frequenz in dem Bereich von 20 kHz bis 30 MHz zu dämpfen.

In einer Ausführungsform ist das erste pulsweitenmodulierte Schaltsignal gegenüber dem zweiten pulsweitenmodulierten Schaltsignal um eine halbe Schaltperiode phasenverschoben, um in Summe den Strom durch den ersten steuerbaren Schalter und den Strom durch den zweiten steuerbaren Schalter gegeneinander zu einem Gleichstromsignal zu kompensieren. Die halbe Schaltperiode kann insbesondere von einer Halbperiode des Eingangssignals, beispielsweise einer Netzsinusspannung abweichen. Dementsprechend kann eine Schaltfrequenz der steuerbaren Schalter insbesondere größer sein als eine Frequenz des Eingangssignals, um eine effiziente Regelung des Ausgangssignals zu erreichen.

Weitere Ausführungsbeispiele werden bezugnehmend auf die beiliegenden Figuren erläutert. Es zeigen:
- Fig. 1: eine Stromschaltersteuerung in einer Ausführungsform;
- Fig. 2: ein Ausgangssignalpegel einer verschachtelten Leistungsfaktorkorrektur-Schaltung in einer Ausführungsform;
- Fig. 3: eine verschachtelte Leistungsfaktorkorrektur-Schaltung in einer Ausführungsform; und
- Fig. 4A, 4B: Signalverlaufsdarstellung eines Ausgangssignals einer verschachtelten Leistungsfaktorkorrektur-Schaltung in einer Ausführungsform.

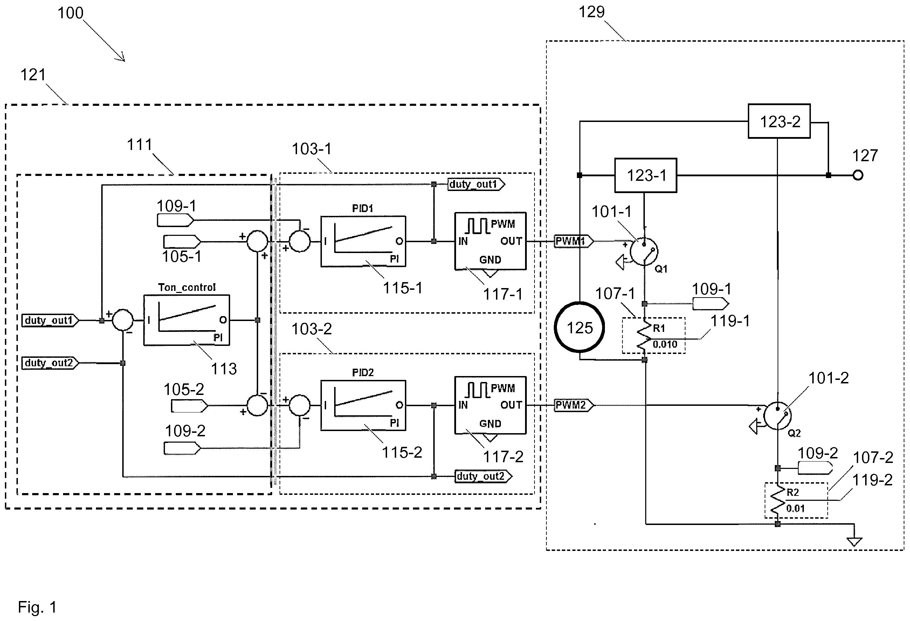

Fig. 1 zeigt eine schematische Darstellung einer Stromschaltersteuerung 100 zur Schaltzeitregelung von steuerbaren Schaltern 101-1, 101-2. Die Stromschaltersteuerung 100 umfasst einen ersten steuerbaren Schalter 101-1, welcher einen ersten Schaltzustand und einen zweiten Schaltzustand aufweist und einen ersten Stromschaltregler 103-1 zur Schaltsteuerung des ersten steuerbaren Schalters 101-1. Der erste Stromschaltregler 103-1 ist ausgebildet, auf Grundlage eines Stromreferenzwerts 105-1 und eines von einem ersten Strommessgerät 107-1 erfassten ersten Strommesswerts 109-1 eines Stromflusses durch den ersten steuerbaren Schalter 101-1 ein erstes pulsweitenmoduliertes Schaltsignal PWM1 zur Steuerung des ersten steuerbaren Schalters 101-1 zu erzeugen. Weiterhin ist der erste steuerbare Schalter 101-1 ausgebildet, entsprechend dem ersten pulsweitenmodulierten Schaltsignal PWM1 von dem ersten Schaltzustand in den zweiten Schaltzustand überzugehen.

Die Stromschaltersteuerung 100 umfasst ferner einen zweiten steuerbaren Schalter 101-2, welcher einen dritten Schaltzustand und einen vierten Schaltzustand aufweist, und einen zweiten Stromschaltregler 103-2 zur Schaltsteuerung des zweiten steuerbaren Schalters 101-2. Der zweite Stromschaltregler 103-2 ist ausgebildet, auf Grundlage eines Stromreferenzwerts 105-2 und eines von einem weiteren Strommessgerät 107-2 erfassten zweiten Strommesswerts 109-2 eines Stromflusses durch den zweiten steuerbaren Schalter 101-2 ein zweites pulsweitenmoduliertes Schaltsignal PWM2 zur Steuerung des zweiten steuerbaren Schalters 101-2 zu erzeugen, wobei der zweite steuerbare Schalter 101-2 ausgebildet ist, entsprechend dem zweiten pulsweitenmodulierten Schaltsignal PWM2 von dem dritten Schaltzustand in den vierten Schaltzustand überzugehen.

Die Stromschaltersteuerung umfasst ferner einen Referenzwertregler 111, welcher ausgebildet ist, auf Grundlage des ersten pulsweitenmodulierten Schaltsignals PWM1 und des zweiten pulsweitenmodulierten Schaltsignals PWM2 den Stromreferenzwert 105-1, 105-2 jeweils separat für den ersten Stromschaltregler 103-1 und den zweiten Stromschaltregler 103-2 zu ändern.

Der erste Stromschaltregler 103-1 weist einen ersten proportionalen-integrierenden-derivativen PID Regler 115-1 auf und ist ausgebildet, den ersten Strommesswert 109-1 von dem Stromreferenzwert 105-1 zu subtrahieren und diesen Differenzwert als ein erstes Eingangssignal dem ersten PID-Regler 115-1 bereitzustellen. Der erste Stromschaltregler 103-1 weist ferner einen ersten Signalgenerator 117-1 auf, welcher ausgebildet ist, das erste Schaltzeitregelsignal duty_out1 in das erste pulsweitenmodulierte Schaltsignal PWM1 zur Ansteuerung des ersten steuerbaren Stromschalters 101-1, zu wandeln.

Der zweite Stromschaltregler 103-2 weist einen zweiten proportional-integral-derivativen PID Regler 115-2 auf und ist ausgebildet, den zweiten Strommesswert 109-2 auf Grundlage des Stromreferenzwerts 105-2 zu verarbeiten, insbesondere den zweiten Strommesswert 109-2 von dem Stromreferenzwert 105-2 zu subtrahieren und als ein zweites Eingangssignal dem zweiten PID-Regler 115-2 bereitzustellen. Der zweite Stromschaltregler 103-2 weist ferner einen zweiten Signalgenerator 117-2 auf, welcher ausgebildet ist, das zweite Schaltzeitregelsignal duty_out2 in das zweite pulsweitenmodulierte Schaltsignal PWM2 zur Ansteuerung des zweiten steuerbaren Stromschalters 101-2, zu wandeln.

Der Referenzwertregler 111 weist einen weiteren proportionalen-integrierenden-derivativen PID Regler 113 auf und ist ausgebildet, dem weiteren PID-Regler 113 den Differenzwert als ein Eingangssignal bereitzustellen, und der PID-Regler 113 ist ausgebildet, das Referenzwertregelsignal zu erzeugen.

Die Stromschaltersteuerung 100 umfasst ferner das erste Strommessgerät 107-1, welches ausgebildet ist, den ersten Strommesswert 109-1 eines durch den ersten steuerbaren Schalter 101-1 fließenden Stroms zu erfassen, und das zweite Strommessgerät 107-2, welches ausgebildet ist, den zweiten Strommesswert 109-2 eines durch den zweiten steuerbaren Schalter 101-2 fließenden Stroms zu erfassen. Das erste Strommessgerät 107-1 und das zweite Strommessgerät 107-2 umfassen jeweils einen Strommesswiderstand 119-1, 119-2.

Der erste steuerbare Schalter 101-1 und der zweite steuerbare Schalter 101-2 sind elektrisch parallel zueinander angeordnet, und ein Regelverbund 121, umfassend den ersten Stromschaltregler 103-1, den zweiten Stromschaltregler 103-2 und den Referenzwertregler 111, ausgebildet ist, den ersten steuerbaren Schalter 101-1 mit dem ersten pulsweitenmodulierten Schaltsignal PWM1 zu beaufschlagen und den zweiten steuerbaren Schalter 101-2 mit dem zweiten pulsweitenmodulierten Schaltsignal PWM2 zu beaufschlagen.

Der erste steuerbare Schalter 101-1 ist einem ersten verschachtelten Konverter 123-1 nachgeschaltet und der zweite steuerbare Schalter 101-2 ist einem zweiten verschachtelten Konverter 123-2 nachgeschaltet. Den verschachtelten Konvertern 123-1, 123-2 ist eine Spannungsquelle 125 vorgeschaltet. Die Spannungsquelle 125 ist insbesondere eine Wechselstromquelle mit einer Gleichrichterschaltung. Ein Ausgangssignal einer verschachtelten Leistungsfaktorkorrektur-Schaltung 129 kann an einem Signalausgang 127 abgegriffen werden.

Der Referenzwertregler 111 ist ausgebildet, eine Abweichung des ersten Strommesswerts 109-1 von dem tatsächlich durch den ersten steuerbaren Schalter 101-1 fließenden Stroms und/oder eine Abweichung des zweiten Strommesswerts 109-2 von dem tatsächlich durch den zweiten steuerbaren Schalter 101-2 fließenden Stroms mittels einer Regelung des Stromreferenzwertes 105-1, 105-2 zu kompensieren, um hochfrequente Stromschwingungen mit einer Frequenz in dem Bereich von 20 kHz bis 30 MHz zu dämpfen.

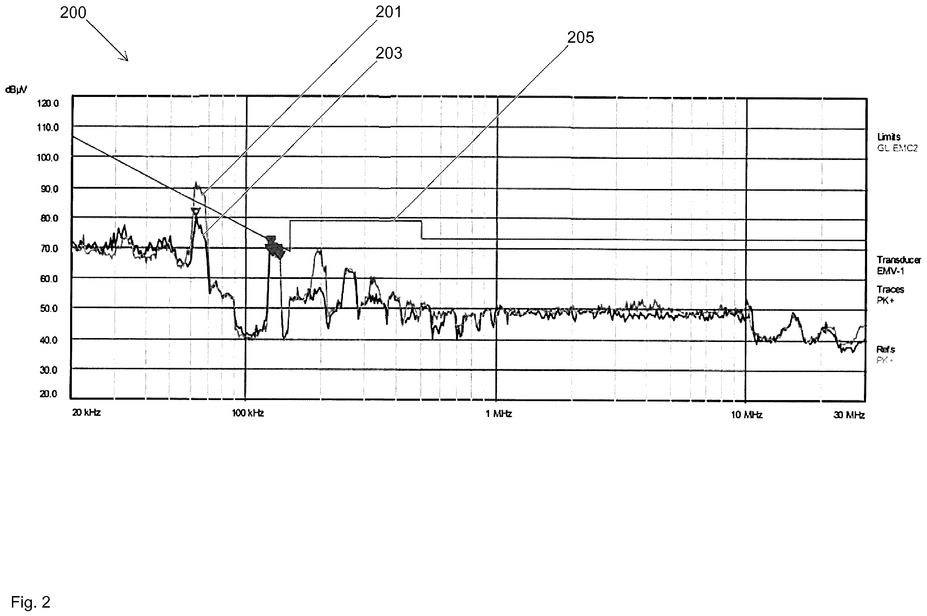

Fig. 2 zeigt eine Vergleichsdarstellung 200 eines Ausgangssignals 201 einer verschachtelten Leistungsfaktorkorrektur-Schaltung und eines weiteren Ausgangssignals 203 einer weiteren verschachtelten Leistungsfaktorkorrektur-Schaltung gemäß der in Fig. 1 gezeigten Ausführungsform. Die steuerbaren Schalter der weiteren verschachtelten Leistungsfaktorkorrektur-Schaltung sind mittels einer Stromschaltersteuerung gemäß der in Fig. 1 gezeigten Ausführungsform geregelt, welche insbesondere einen Referenzwertregler zur Regelung eines Stromreferenzwerts umfasst. Ferner ist eine Leistungsgrenzwertkennlinie 205 gezeigt, welche frequenzabhängige maximale Leistungsgrenzwerte für die Ausgangssignale 201, 203 definiert.

Insbesondere in den Frequenzbereichen von 60 kHz bis 70 kHz und 120 kHz bis 130 kHz überschreitet das Ausgangsignal 201 die mittels der Leistungsgrenzwertkennlinie 205 definierten Leistungsgrenzwerte. Hingegen weist das Ausgangssignal 203 keine Überschreitungen der Leistungsgrenzwerte in dem betrachteten Frequenzbereich auf.

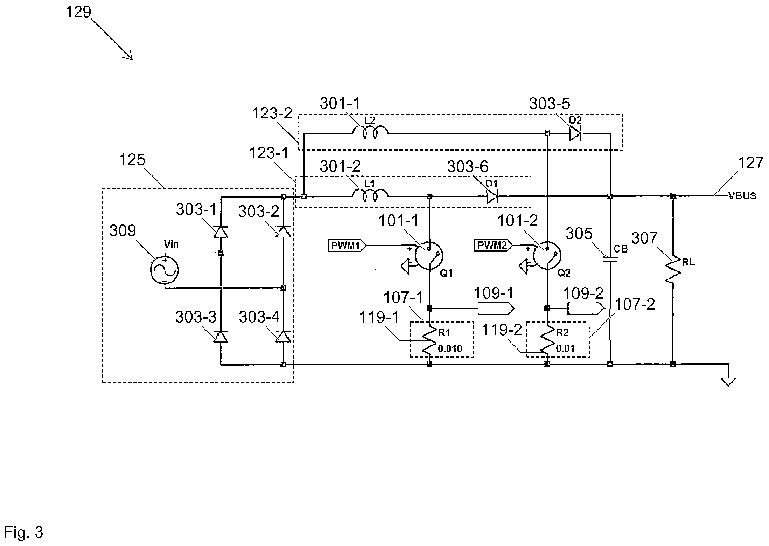

Fig. 3 zeigt eine schematische Darstellung der verschachtelten Leistungsfaktorkorrektur-Schaltung 129 gemäß der in Fig. 1 gezeigten Ausführungsform.

Die Spannungsquelle 125 umfasst einen Wechselspannungsgenerator 309 und eine Gleichrichterschaltung, welche durch einen Brückengleichrichter gebildet ist. Der Brückengleichrichter besteht aus einer Anordnung von vier Dioden 303-1 bis 303-4, welche ausgebildet sind ein Wechselspannungssignal des Wechselspannungsgenerators 309 in ein Gleichspannungssignal zu wandeln und den verschachtelten Konvertern 123-1, 123-2 bereitzustellen.

Die verschachtelten Konverter 123-1, 123-2 sind dem Brückengleichrichter nachgeschaltet und zueinander parallel geschaltet. Ferner weisen die verschachtelten Konverter 123-1, 123-2 jeweils eine Induktivität 301-1, 301-2 auf, welcher jeweils eine Diode 303-5, 303-6 nachgeschaltet ist. Ferner ist der erste steuerbare Schalter 101-1 der Induktivität 301-1 vorgeschaltet und der zweite steuerbare Schalter 101-2 ist der Induktivität 301-2 vorgeschaltet. Der erste Strommesswert 109-1 kann zwischen dem ersten steuerbaren Schalter 101-1 und dem ersten Strommesswiderstand 119-1 abgegriffen werden und der zweite Strommesswert 109-1 kann zwischen dem zweiten steuerbaren Schalter 101-2 und dem zweiten Strommesswiderstand 119-1 abgegriffen werden.

Den geschachtelten Konverter 123-1, 123-2 ist ein Kondensator 305 und ein Widerstand 307 nachgeschaltet, welche jeweils parallel zu der Spannungsquelle 125 geschaltet sind, wobei der Kondensator 305 parallel zu dem Widerstand 307 geschaltet ist. Ein Ausgangssignal der verschachtelten Leistungsfaktorkorrektur-Schaltung 129 ist an dem Signalausgang 127 bereitgestellt.

Dem ersten steuerbaren Schalter 101-1 ist das erste pulsweitenmoduliertes Schaltsignal PWM1 von der Stromschaltersteuerung gemäß der in Fig. 1 gezeigten Ausführungsform bereitgestellt und dem zweiten steuerbaren Schalter 101-2 ist das zweite pulsweitenmodulierte Schaltsignal PWM2 von der Stromschaltersteuerung gemäß der in Fig. 1 gezeigten Ausführungsform bereitgestellt.

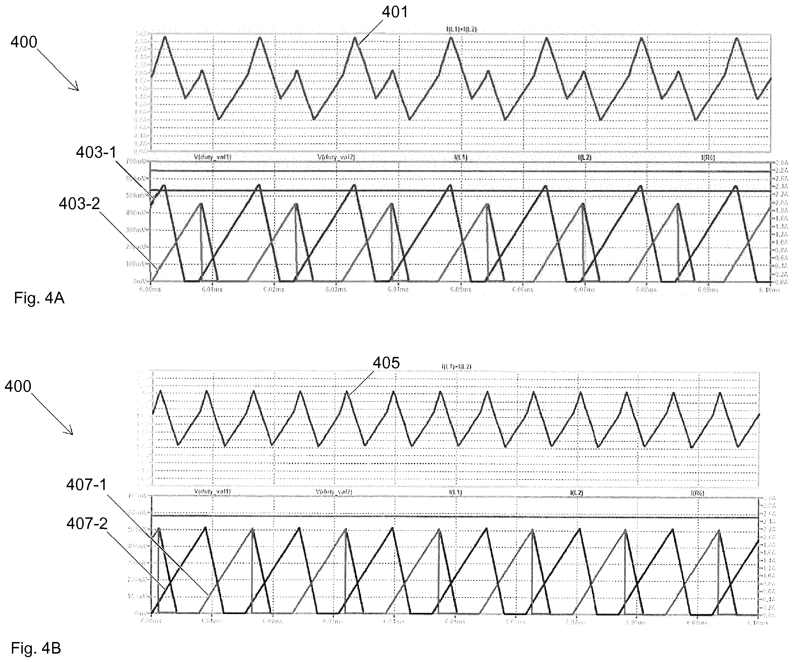

Fig. 4A zeigt einen zeitliche Signalverlaufsdarstellung 400 des Ausgangssignals 201 gemäß der in Fig. 2 gezeigten Ausführungsform, wobei sowohl das Summensignal 401 als auch die einzelnen Komponentensignal 403-1, 403-2 der jeweiligen verschachtelten Konverter dargestellt sind. Die Komponentensignale 403-1, 403-2 sind derart überlagert, dass das Summensignal 401 einer Summe zweier phasenverschobener Sägezahnsignale bildet, welche insbesondere unterschiedliche maximale Amplituden aufweisen, sodass sich Störleistungen oberhalb einer nominalen Frequenz des Summensignal 401, respektive Ausgangssignals ergeben. Der zeitliche Verlauf der Komponentensignale 403-1, 403-2 wird jeweils durch die steuerbaren Schalter gemäß der in Fig. 1 gezeigten Ausführungsform bestimmt. Das Ausgangssignal 201 kann insbesondere bei einer asynchronen Schaltung der steuerbaren Schalter zueinander erzeugt sein.

Fig. 4B zeigt einen zeitliche Signalverlaufsdarstellung 400 des weiteren Ausgangssignals gemäß der in Fig. 2 gezeigten Ausführungsform, wobei sowohl das Summensignal 405 als auch die einzelnen Komponentensignal 407-1, 407-2 der jeweiligen verschachtelten Konverter dargestellt sind. Die Komponentensignale 403-1, 403-2 sind derart überlagert, dass das Summensignal 405 einer Summe zweier phasenverschobener Sägezahnsignale bildet, welche insbesondere gleiche maximale Amplituden aufweisen, sodass Störleistungen oberhalb einer nominalen Frequenz des Summensignal 405, respektive des weiteren Ausgangssignals unterbunden sind. Der zeitliche Verlauf der Komponentensignale 407-1, 407-2 wird jeweils durch die steuerbaren Schalter gemäß der in Fig. 1 gezeigten Ausführungsform bestimmt. Das Summensignal 405 kann insbesondere bei einer synchronen Schaltung der steuerbaren Schalter zueinander erzeugt sein.

### Bezugszeichenliste

- 100: Stromschaltersteuerung
- 101-1: Steuerbarer Schalter
- 101-2: Steuerbarer Schalter
- 103-1: Erster Stromschaltregler
- 103-2: Zweiter Stromschaltregler
- 105-1: Stromreferenzwert
- 105-2: Stromreferenzwert
- 107-1: Erstes Strommessgerät
- 107-2: Zweites Strommessgerät
- 109-1: Erster Strommesswert
- 109-2: Zweiter Strommesswert
- 111: Referenzwertregler
- 113: PID-Regler
- 115-1: PID-Regler
- 115-2: PID-Regler
- 117-1: Erster Signalgenerator
- 117-2: Zweiter Signalgenerator
- 119-1: Strommesswiderstand
- 119-2: Strommesswiderstand
- 121: Regelverbund
- 123-1: Erster verschachtelter Konverter
- 123-2: Zweiter verschachtelter Konverter
- 125: Spannungsquelle
- 127: Signalausgang
- 129: Verschachtelte Leistungsfaktorkorrektur-Schaltung

- 200: Vergleichsdarstellung
- 201: Ausgangssignal
- 203: Ausgangssignal
- 205: Leistungsgrenzwertkennlinie

- 301-1: Induktivität
- 301-2: Induktivität
- 303-1: Diode
- 303-2: Diode
- 303-3: Diode
- 303-4: Diode
- 303-5: Diode
- 303-6: Diode
- 305: Kondensator
- 307: Widerstand
- 309: Wechselspannungsgenerator

- 400: zeitliche Signalverlaufsdarstellung
- 401: Summensignal
- 403-1: Komponentensignal
- 403-2: Komponentensignal
- 405: Summensignal
- 407-1: Komponentensignal
- 407-2: Komponentensignal

## Patentansprüche

1. Stromschaltersteuerung (100) zur Schaltzeitregelung von steuerbaren Schaltern (101-1, 101-2), mit:
einem ersten steuerbaren Schalter (101-1), welcher einen ersten Schaltzustand und einen zweiten Schaltzustand aufweist;
einem ersten Stromschaltregler (103-1) zur Schaltsteuerung des ersten steuerbaren Schalters, wobei der erste Stromschaltregler (103-1) ausgebildet ist, auf Grundlage eines Stromreferenzwerts (105-1) und eines von einem ersten Strommessgerät (107-1) erfassten ersten Strommesswerts (109-1) eines Stromflusses durch den ersten steuerbaren Schalter (101-1) ein erstes Schaltzeitregelsignal (duty_out1) und ein dem ersten Schaltzeitregelsignal entsprechendes erstes pulsweitenmoduliertes Schaltsignal (PWM1) zur Steuerung des ersten steuerbaren Schalters (101-1) zu erzeugen; wobei der erste steuerbare Schalter (101-1) ausgebildet ist, entsprechend dem ersten pulsweitenmodulierten Schaltsignal (PWM1) von dem ersten Schaltzustand in den zweiten Schaltzustand überzugehen;
einem zweiten steuerbaren Schalter (101-2), welcher einen dritten Schaltzustand und vierten Schaltzustand aufweist;
einem zweiten Stromschaltregler (103-2) zur Schaltsteuerung des zweiten steuerbaren Schalters (101-2), wobei der zweite Stromschaltregler (103-2) ausgebildet ist, auf Grundlage eines Stromreferenzwerts (105-2) und eines von einem weiteren Strommessgerät (107-2) erfassten zweiten Strommesswerts (109-2) eines Stromflusses durch den zweiten steuerbaren Schalter (101-2) ein zweites Schaltzeitregelsignal (duty_out2) und ein dem zweiten Schaltzeitregelsignal entsprechendes zweites pulsweitenmoduliertes Schaltsignal (PWM2) zur Steuerung des zweiten steuerbaren Schalters (101-2) zu erzeugen, wobei
der zweite steuerbare Schalter (101-2) ausgebildet ist, entsprechend dem zweiten pulsweitenmodulierten Schaltsignal (PWM2) von dem dritten Schaltzustand in den vierten Schaltzustand überzugehen; und
einem Referenzwertregler (111), welcher ausgebildet ist, auf Grundlage des ersten Schaltzeitregelsignals (duty_out1) und des zweiten Schaltzeitregelsignals (duty_out2) den Stromreferenzwert (105-1, 105-2) jeweils separat für den ersten Stromschaltregler (103-1) und den zweiten Stromschaltregler (103-2) zu ändern,
wobei der Referenzwertregler (111) ausgebildet ist, eine Differenz von ersten und zweiten Schaltzeitregelsignalen (duty_out1, duty_out2) der jeweiligen Stromschaltregler (103-1, 103-2) zu nutzen, um ein Referenzwertregelsignal zu erzeugen,
wobei ein Addierglied den dem ersten Stromschaltregler (103-1) zugeführten geregelten Stromreferenzwert ermittelt, wobei das Addierglied ausgebildet ist, das Referenzwertregelsignal zum ersten Stromreferenzwert (105-1) zu addieren,
wobei ein Differenzglied den dem zweiten Stromschaltregler (103-2) zugeführten geregelten Stromreferenzwert ermittelt, wobei das Differenzglied ausgebildet ist, das Referenzwertregelsignal vom zweiten Stromreferenzwert (105-2) zu subtrahieren, wodurch der Referenzwertregler (111) ausgebildet ist, Abweichungen der von den Strommessgeräten bereitgestellten Strommesswerte zu kompensieren.

2. Stromschaltersteuerung (100) nach einem der vorstehenden Ansprüche, wobei der erste Stromschaltregler (103-1) einen ersten proportionalen-integrierenden-derivativen (PID) Regler (115-1) aufweist und ausgebildet ist, den ersten Strommesswert (109-1) auf Grundlage des Stromreferenzwerts (105-1) zu verarbeiten, insbesondere den ersten Strommesswert (109-1) von dem Stromreferenzwert (105-1) zu subtrahieren und diesen Differenzwert als ein erstes Eingangssignal dem ersten PID-Regler (115-1) bereitzustellen.

3. Stromschaltersteuerung (100) nach Anspruch 2, wobei der erste PID-Regler (115-1) ausgebildet ist, auf Grundlage des ersten Eingangssignals das erste Schaltzeitregelsignal bereitzustellen.

4. Stromschaltersteuerung (100) nach Anspruch 3, wobei der erste Stromschaltregler (103-1) einen ersten Signalgenerator (117-1) aufweist, welcher ausgebildet ist, das erste Schaltzeitregelsignal in das erste pulsweitenmodulierte Schaltsignal zur Ansteuerung des ersten steuerbaren Stromschalters (101-1), zu wandeln.

5. Stromschaltersteuerung (100) nach einem der vorstehenden Ansprüche, wobei der zweite Stromschaltregler (103-2) einen zweiten proportional-integral-derivativen (PID) Regler (115-2) aufweist und ausgebildet ist, den zweiten Strommesswert (109-2) auf Grundlage des Stromreferenzwerts (105-2) zu verarbeiten, insbesondere den zweiten Strommesswert (109-2) von dem Stromreferenzwert (105-2) zu subtrahieren und als ein zweites Eingangssignal dem zweiten PID-Regler (115-2) bereitzustellen.

6. Stromschaltersteuerung (100) nach Anspruch 5, wobei der zweite PID-Regler (115-2) ausgebildet ist, auf Grundlage des zweiten Eingangssignals das zweite Schaltzeitregelsignal bereitzustellen.

7. Stromschaltersteuerung (100) nach Anspruch 6, wobei der zweite Stromschaltregler (103-2) einen zweiten Signalgenerator (117-2) aufweist, welcher ausgebildet ist, das zweite Schaltzeitregelsignal in das erste pulsweitenmodulierte Schaltsignal zur Ansteuerung des zweiten steuerbaren Stromschalters (101-2), zu wandeln.

8. Stromschaltersteuerung (100) nach einem der vorstehenden Ansprüche, wobei der Referenzwertregler (111) ausgebildet ist, einen Differenzwert zwischen dem ersten Schaltzeitregelsignal und dem zweiten Schaltzeitregelsignal zu erzeugen.

9. Stromschaltersteuerung (100) nach Anspruch 8, wobei der Referenzwertregler (111) einen weiteren proportionalen-integrierenden-derivativen (PID) Regler (113) aufweist und ausgebildet ist, dem weiteren PID-Regler (113) den Differenzwert als ein Eingangssignal bereitzustellen, und wobei der PID-Regler (113) ausgebildet ist, das Referenzwertregelsignal zu erzeugen.

10. Stromschaltersteuerung (100) nach einem der vorstehenden Ansprüche, mit dem ersten Strommessgerät (107-1), welches ausgebildet ist, den ersten Strommesswert (109-1) eines durch den ersten steuerbaren Schalter (101-1) fließenden Stroms zu erfassen, und mit dem zweiten Strommessgerät (107-2), welches ausgebildet ist, den zweiten Strommesswert (109-2)eines durch den zweiten steuerbaren Schalter (101-2) fließenden Stroms zu erfassen, wobei das erste Strommessgerät (107-1) und/oder das zweite Strommessgerät (107-2) jeweils einen Strommesswiderstand (119-1, 119-2) umfassen.

11. Stromschaltersteuerung (100) nach einem der vorstehenden Ansprüche, wobei der erste Stromschaltregler (103-1), der zweite Stromschaltregler (103-2) und/oder der Referenzwertregler (111) Teil eines digitalen Signalprozessors (DSP) sind und/oder wobei der erste Stromschaltregler (103-1), der zweite Stromschaltregler (103-2) und/oder der Referenzwertregler (111) zumindest teilweise als ein Softwareprogramm realisiert sind, welches von dem digitalen Signalprozessor ausführbar ist.

12. Stromschaltersteuerung (100) nach einem der vorstehenden Ansprüche, wobei der erste steuerbare Schalter(101-1) und der zweite steuerbare Schalter(101-2) elektrisch parallel zueinander angeordnet sind, und wobei ein Regelverbund (121), umfassend den ersten Stromschaltregler (103-1), den zweiten Stromschaltregler (103-2) und den Referenzwertregler (111), ausgebildet ist, den ersten steuerbaren Schalter(101-1) mit dem ersten pulsweitenmodulierten Schaltsignal zu beaufschlagen und den zweiten steuerbaren Schalter(101-2) mit dem zweiten pulsweitenmodulierten Schaltsignal zu beaufschlagen.

13. Stromschaltersteuerung (100) nach Anspruch 12, wobei der Regelverbund (121) ausgebildet ist, mittels einer Steuerung der jeweiligen Schaltzeiten der steuerbaren Schalter (101-1, 101-2) eine Stromstärke und/oder eine Stromfrequenz eines Summenstromes, welcher als Summensignal des durch den ersten steuerbaren Schalter(101-1) fließenden Stroms und des durch den zweiten steuerbaren Schalter(101-2) fließenden Stroms gebildet ist, zu regeln.

14. Stromschaltersteuerung (100) nach einem der vorstehenden Ansprüche, wobei der Referenzwertregler (111) ausgebildet ist, eine Abweichung des ersten Strommesswertes (109-1) von dem tatsächlich durch den ersten steuerbaren Schalter (101-1) fließenden Stroms und/oder eine Abweichung des zweiten Strommesswertes (109-2) von dem tatsächlich durch den zweiten steuerbaren Schalter (101-2) fließenden Stroms mittels einer Regelung des Stromreferenzwertes (105-1, 105-2) zu kompensieren, um hochfrequente Stromschwingungen mit einer Frequenz in dem Bereich von 20 kHz bis 30 MHz zu dämpfen.

15. Stromschaltersteuerung (100) nach einem der vorstehenden Ansprüche, wobei das erste pulsweitenmodulierte Schaltsignal gegenüber dem zweiten pulsweitenmodulierten Schaltsignal um eine halbe Schaltperiode phasenverschoben ist, um in Summe den Strom durch den ersten steuerbaren Schalter (101-1) und den Strom durch den zweiten steuerbaren Schalter (101-2) gegeneinander zu einem Gleichstromsignal zu kompensieren.

## Claims

1. Current switch control (100) for switching time control of controllable switches (101-1, 101-2), comprising:
a first controllable switch (101-1), which has a first switching state and a second switching state;
a first current switching controller (103-1) for switching control of the first controllable switch, wherein the first current switching controller (103-1) is configured, on the basis of a current reference value (105-1) and a first current measurement value (109-1) of a current flow through the first controllable switch (101-1) detected by a first current measuring device (107-1), to generate a first switching time control signal (duty_out1) and a first pulse width modulated switching signal (PWM1) corresponding to the first switching time control signal for controlling the first controllable switch (101-1); wherein the first controllable switch (101-1) is configured to change from the first switching state to the second switching state in accordance with the first pulse-width-modulated switching signal (PWM1);
a second controllable switch (101-2), which has a third switching state and a fourth switching state;
a second current switching controller (103-2) for switching control of the second controllable switch (101-2), wherein the second current switching controller (103-2) is configured, on the basis of a current reference value (105-2) and a second current measurement value (109-2) of a current flow through the second controllable switch (101-2) detected by a further current measuring device (107-2), to generate a second switching time control signal (duty_out2) and a second pulse width modulated switching signal (PWM2) corresponding to the second switching time control signal for controlling the second controllable switch (101-2); wherein the second controllable switch (101-2) is configured to change from the third switching state to the fourth switching state in accordance with the second pulse-width-modulated switching signal (PWM2); and
a reference value controller (111), which is configured, on the basis of the first switching time control signal (duty_out1) and the second switching time control signal (duty_out2), to change the current reference value (105-1, 105-2) each separately for the first current switching controller (103-1) and the second current switching controller (103-2),
wherein the reference value controller (111) is configured to use a difference between first and second switching time control signals (duty_out1, duty_out2) of the respective current switching controllers (103-1, 103-2) in order to generate a reference value control signal,
wherein an adder determines the regulated current reference value supplied to the first current switching controller (103-1), wherein the adder is configured to add the reference value control signal to the first current reference value (105-1),
wherein a subtractor determines the regulated current reference value supplied to the second current switching controller (103-2), wherein the subtractor is configured to subtract the reference value control signal from the second current reference value (105-2), whereby the reference value controller (111) is configured to compensate for deviations of the current measurement values provided by the current measuring devices.

2. Current switch control (100) according to one of the preceding claims, wherein the first current switching controller (103-1) has a first proportional-integral-derivative, PID, controller (115-1) and is configured to process the first current measurement value (109-1) on the basis of the current reference value (105-1), in particular to subtract the first current measurement value (109-1) from the current reference value (105-1) and to provide this difference value as a first input signal to the first PID controller (115-1).

3. Current switch control (100) according to claim 2, wherein the first PID controller (115-1) is configured to provide the first switching time control signal on the basis of the first input signal.

4. Current switch control (100) according to claim 3, wherein the first current switching controller (103-1) has a first signal generator (117-1), which is configured to convert the first switching time control signal into the first pulse-width-modulated switching signal for controlling the first controllable current switch (101-1).

5. Current switch control (100) according to one of the preceding claims, wherein the second current switching controller (103-2) has a second proportional-integral-derivative, PID, controller (115-2) and is configured to process the second current measurement value (109-2) on the basis of the current reference value (105-2), in particular to subtract the second current measurement value (109-2) from the current reference value (105-2) and to provide it as a second input signal to the second PID controller (115-2).

6. The Current switch control (100) according to claim 5, wherein the second PID controller (115-2) is configured to provide the second switching time control signal on the basis of the second input signal.

7. The Current switch control (100) according to claim 6, wherein the second current switching controller (103-2) has a second signal generator (117-2), which is configured to convert the second switching time control signal into the first pulse-width-modulated switching signal for actuating the second controllable current switch (101-2).

8. Current switch control (100) according to one of the preceding claims, wherein the reference value controller (111) is configured to generate a difference value between the first switching time control signal and the second switching time control signal.

9. Current switch control (100) according to claim 8, wherein the reference value controller (111) has a further proportional-integral-derivative, PID, controller (113) and is configured to provide the further PID controller (113) with the difference value as an input signal. and wherein the PID controller (113) is configured to generate the reference value control signal.

10. Current switch control (100) according to one of the preceding claims, comprising the first current measuring device (107-1), which is configured to detect the first current measurement value (109-1) of a current flowing through the first controllable switch (101-1), and the second current measuring device (107-2), which is configured to detect the second current measurement value (109-2) of a current flowing through the second controllable switch (101-2), wherein the first current measuring device (107-1) and/or the second current measuring device (107-2) each comprise a current measuring resistor (119-1, 119-2).

11. Current switch control (100) according to one of the preceding claims, wherein the first current switching controller (103-1), the second current switching controller (103-2) and/or the reference value controller (111) are part of a digital signal processor (DSP), and/or wherein the first current switching controller (103-1), the second current switching controller (103-2) and/or the reference value controller (111) are at least partially implemented as a software program which can be executed by the digital signal processor.

12. Current switch control (100) according to one of the preceding claims, wherein the first controllable switch (101-1) and the second controllable switch (101-2) are arranged electrically in parallel to one another, and wherein a control system (121) comprising the first current switching controller (103-1), the second current switching controller (103-2) and the reference value controller (111) is configured to apply the first pulse-width-modulated switching signal to the first controllable switch (101-1) and to apply the second pulse-width-modulated switching signal to the second controllable switch (101-2).

13. Current switch control (100) according to claim 12, wherein the control system (121) is configured to control the respective switching times of the controllable switches (101-1, 101-2), a current and/or a current frequency of a current sum, which is formed as a sum signal of the current flowing through the first controllable switch (101-1) and the current flowing through the second controllable switch (101-2).

14. Current switch control (100) according to one of the preceding claims, wherein the reference value controller (111) is configured to compensate for a deviation of the first current measurement value (109-1) from the current actually flowing through the first controllable switch (101-1) and/or to compensate for a deviation of the second current measurement value (109-2) from the current actually flowing through the second controllable switch (101-2) by means of a control of the current reference value (105-1, 105-2) in order to dampen high-frequency current oscillations with a frequency in the range of 20 kHz to 30 MHz.

15. Current switch control (100) according to one of the preceding claims, wherein the first pulse-width-modulated switching signal is phase-shifted by half a switching period with respect to the second pulse-width-modulated switching signal, in order to compensate of the current through the first controllable switch (101-1) and the current through the second controllable switch (101-2) against each other in sum to a DC signal.

## Revendications

1. Commande de commutateur de courant (100) pour la commande de temps de commutation de commutateurs commandables (101-1, 101-2), comprenant :
un premier commutateur commandable (101-1), qui a un premier état de commutation et un deuxième état de commutation ;
un premier contrôleur de commutation de courant (103-1) pour la commande de commutation du premier commutateur contrôlable, le premier contrôleur de commutation de courant (103-1) étant configuré, sur la base d'une valeur de référence de courant (105-1) et d'un premier contrôleur de commutation de courant (103-1) valeur de mesure (109-1) d'un flux de courant à travers le premier commutateur commandable (101-1) détectée par un premier dispositif de mesure de courant (107-1), pour générer un premier signal de commande de temps de commutation (duty_out1) et une première largeur d'impulsion un signal de commutation modulé (PWM1) correspondant au premier signal de commande de temps de commutation pour commander le premier commutateur commandable (101-1) ;
dans lequel le premier commutateur commandable (101-1) est configuré pour passer du premier état commuté au deuxième état commuté conformément au premier signal de commutation modulé en largeur d'impulsion (PWM1) ;
un deuxième commutateur commandable (101-2), qui a un troisième état commuté et un quatrième état commuté ;
un deuxième contrôleur de commutation de courant (103-2) pour la commande de commutation du deuxième commutateur contrôlable (101-2), le deuxième contrôleur de commutation de courant (103-2) étant configuré, sur la base d'une valeur de référence de courant (105-2) et une deuxième valeur de mesure de courant (109-2) d'un flux de courant à travers le deuxième commutateur contrôlable (101-2) détecté par un autre dispositif de mesure de courant (107-2), pour générer un deuxième signal de commande de temps de commutation (duty_out2) et un deuxième signal de commutation modulé en largeur d'impulsion (PWM2) correspondant au deuxième signal de commande de temps de commutation pour commander le deuxième commutateur commandable (101-2) ; dans lequel le deuxième commutateur commandable (101-2) est configuré pour passer du troisième état commuté au quatrième état commuté conformément au deuxième signal de commutation modulé en largeur d'impulsion (PWM2) ; et
un contrôleur de valeur de référence (111), qui est configuré, sur la base du premier signal de commande de temps de commutation (duty_out1) et du deuxième signal de commande de temps de commutation (duty_out2), pour modifier la valeur de référence actuelle (105-1, 105-2) chacun séparément pour le premier contrôleur de commutation de courant (103-1) et le deuxième contrôleur de commutation de courant (103-2),
dans lequel le contrôleur de valeur de référence (111) est configuré pour utiliser une différence entre les premier et deuxième signaux de commande de temps de commutation (duty_out1, duty_out2) des contrôleurs de commutation de courant respectifs (103-1, 103-2) afin de générer une commande de valeur de référence signal,
dans lequel un additionneur détermine la valeur de référence de courant régulé fournie au premier contrôleur de commutation de courant (103-1), dans lequel l'additionneur est configuré pour ajouter le signal de commande de valeur de référence à la première valeur de référence de courant (105-1),
dans lequel un soustracteur détermine la valeur de référence de courant régulé fournie au deuxième contrôleur de commutation de courant (103-2), dans lequel le soustracteur est configuré pour soustraire le signal de commande de valeur de référence de la deuxième valeur de référence de courant (105-2), grâce à quoi la valeur de référence un contrôleur (111) est configuré pour compenser les écarts des valeurs de mesure actuelles fournies par les dispositifs de mesure de courant.

2. Commande de commutateur de courant (100) selon l'une des revendications précédentes, dans laquelle le premier contrôleur de commutation de courant (103-1) possède un premier contrôleur proportionnel-intégrateur-dérivé (PID) (115-1) et est configuré pour traiter le première valeur de mesure actuelle (109-1) sur la base de la valeur de référence actuelle (105-1), en particulier pour soustraire la première valeur de mesure actuelle (109-1) de la valeur de référence actuelle (105-1) et pour fournir cette valeur de différence comme premier signal d'entrée au premier contrôleur PID (115-1).

3. Commande de commutateur de courant (100) selon la revendication 2, dans laquelle le premier contrôleur PID (115-1) est configuré pour fournir le premier signal de commande de temps de commutation sur la base du premier signal d'entrée.

4. Commande de commutateur de courant (100) selon la revendication 3, dans laquelle le premier contrôleur de commutation de courant (103-1) possède un premier générateur de signal (117-1), qui est configuré pour convertir le premier signal de commande de temps de commutation en la première impulsion un signal de commutation modulé en largeur pour commander le premier commutateur de courant contrôlable (101-1).

5. Commande de commutateur de courant (100) selon l'une des revendications précédentes, dans laquelle le deuxième contrôleur de commutation de courant (103-2) possède un deuxième contrôleur proportionnel-intégral-dérivé (PID) (115-2) et est configuré pour traiter le seconde valeur de mesure de courant (109-2) sur la base de la valeur de référence de courant (105-2), en particulier pour soustraire la deuxième valeur de mesure de courant (109-2) de la valeur de référence de courant (105-2) et pour fournir comme deuxième signal d'entrée au deuxième contrôleur PID (115-2).

6. Commande de commutateur de courant (100) selon la revendication 5, dans laquelle le deuxième contrôleur PID (115-2) est configuré pour fournir le deuxième signal de commande de temps de commutation sur la base du deuxième signal d'entrée.

7. Commande de commutateur de courant (100) selon la revendication 6, dans laquelle le deuxième contrôleur de commutation de courant (103-2) possède un deuxième générateur de signal (117-2), qui est configuré pour convertir le deuxième signal de commande de temps de commutation en le premier signal de commutation modulé en largeur d'impulsion pour actionner le deuxième commutateur de courant commandable (101-2).

8. Commande de commutateur de courant (100) selon l'une des revendications précédentes, dans laquelle le contrôleur de valeur de référence (111) est configuré pour générer une valeur de différence entre le premier signal de commande de temps de commutation et le deuxième signal de commande de temps de commutation.

9. Commande de commutateur de courant (100) selon la revendication 8, dans laquelle le contrôleur de valeur de référence (111) possède un autre contrôleur proportionnel-intégrateur-dérivé (PID) (113) et est configuré pour fournir à l'autre contrôleur PID (113) le valeur de différence comme signal d'entrée et dans lequel le contrôleur PID (113) est configuré pour générer le signal de commande de valeur de référence.

10. Commande de commutateur de courant (100) selon l'une des revendications précédentes, comprenant le premier dispositif de mesure de courant (107-1), qui est configuré pour détecter la première valeur de mesure de courant (109-1) d'un courant circulant dans le premier commutateur contrôlable (101-1) et le deuxième dispositif de mesure de courant (107-2), qui est configuré pour détecter la deuxième valeur de mesure de courant (109-2) d'un courant circulant à travers le deuxième commutateur contrôlable (101-2), dans lequel le premier dispositif de mesure de courant (107-1) et/ou le deuxième dispositif de mesure de courant (107-2) comprennent chacun une résistance de mesure de courant (119-1, 119-2).

11. Commande de commutateur de courant (100) selon l'une des revendications précédentes, dans laquelle le premier contrôleur de commutation de courant (103-1), le deuxième contrôleur de commutation de courant (103-2) et/ou le contrôleur de valeur de référence (111) sont partie d'un processeur de signal numérique (DSP), et/ou dans lequel le premier contrôleur de commutation de courant (103-1), le deuxième contrôleur de commutation de courant (103-2) et/ou le contrôleur de valeur de référence (111) sont au moins partiellement mis en oeuvre en tant que programme logiciel qui peut être exécuté par le processeur de signal numérique.

12. Commande de commutateur de courant (100) selon l'une des revendications précédentes, dans laquelle le premier interrupteur commandable (101-1) et le deuxième interrupteur commandable (101-2) sont disposés électriquement en parallèle l'un par rapport à l'autre, et dans lequel une commande un système (121) comprenant le premier contrôleur de commutation de courant (103-1), le deuxième contrôleur de commutation de courant (103-2) et le contrôleur de valeur de référence (111) est configuré pour appliquer le premier signal de commutation modulé en largeur d'impulsion au premier commutateur contrôlable (101-1) et pour appliquer le deuxième signal de commutation modulé en largeur d'impulsion au deuxième commutateur contrôlable (101-2).

13. Commande de commutateur de courant (100) selon la revendication 12, dans laquelle le système de commande (121) est configuré pour contrôler les temps de commutation respectifs des commutateurs commandables (101-1, 101-2), un courant et/ou un courant fréquence d'une somme de courant, qui est formée comme un signal de somme du courant circulant à travers le premier commutateur commandable (101-1) et du courant circulant à travers le deuxième commutateur commandable (101-2).

14. Commande de commutateur de courant (100) selon l'une des revendications précédentes, dans laquelle le contrôleur de valeur de référence (111) est configuré pour compenser un écart de la première valeur de mesure de courant (109-1) par rapport au courant circulant réellement dans le premier commutateur commandable (101-1) et/ou pour compenser un écart de la deuxième valeur de mesure de courant (109-2) par rapport au courant circulant réellement à travers le deuxième commutateur commandable (101-2) au moyen d'une commande du courant valeur de référence (105-1, 105-2) afin d'amortir les oscillations de courant haute fréquence avec une fréquence comprise entre 20 kHz et 30 MHz.

15. Commande de commutateur de courant (100) selon l'une des revendications précédentes, dans laquelle le premier signal de commutation modulé en largeur d'impulsion est déphasé d'une demi-période de commutation par rapport au deuxième signal de commutation modulé en largeur d'impulsion, en afin de compenser du courant traversant le premier commutateur commandable (101-1) et du courant traversant le deuxième commutateur commandable (101-2) l'un contre l'autre en somme pour obtenir un signal CC.
